# EUROPÄISCHE PATENTSCHRIFT

(11) **EP 0 778 918 B1**
(45) Veröffentlichungstag und Bekanntmachung des Hinweises auf die Patenterteilung: **28.10.1998**
(21) Anmeldenummer: 95931207.5
(22) Anmeldetag: 25.08.1995
(51) Int. Cl.: F01N 3/20, F01N 3/28

(54) **KATALYTISCHER REAKTOR**
CATALYTIC REACTOR
REACTEUR CATALYTIQUE

(30) Priorität: 29.08.1994 DE 4430645
(43) Veröffentlichungstag der Anmeldung: 18.06.1997
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); BRÜCK, Rolf, D-51429 Bergisch Gladbach (DE); BESTENREINER, Georg, D-51503 Rösrath (DE)
(74) Vertreter: Kahlhöfer, Hermann, Dipl.-Phys.
(86) Internationale Anmeldenummer: EP9503373
(87) Internationale Veröffentlichungsnummer: WO9607021

(56) Entgegenhaltungen:
- DE-A- 2 333 092
- DE-A- 4 230 595
- GB-A- 1 395 960

## Beschreibung

Die Erfindung geht aus von einem katalytischen Reaktor zur katalytischen Umsetzung von Abgasen, insbesondere zur katalytischen Umsetzung von Abgasen aus Verbrennungskraftmaschinen.

Durch das G 87 12 267.7 U1 ist ein katalytischer Reaktor zur Abgasreinigung, insbesondere für Kraftfahrzeugmotoren bekannt, der einen Wabenkörper aufweist, in welchem Strömungskanäle für das Abgas ausgebildet sind. Der Wabenkörper ist in einem hülsenförmigen Mantel angeordnet. Zwischen dem Wabenkörper und der Innenoberfläche des Mantels ist eine Wärmeisolierung vorgesehen, so daß der Mantel im Betrieb nicht zu heiß werden kann. Das G 87 12 267.7 U1 schlägt ferner vor, den Mantel zur Wärmeisolierung nach außen mit einer Isolierschale zu versehen. Durch diese Maßnahmen sollen zu große Temperaturgradienten zwischen Mantel und Wabenkörper vermieden und umgebende Bauteile vor Hitze geschützt werden.

Durch die EP 0 229 352 B1 ist ein katalytischer Reaktor bekannt, welcher eine Innen- und eine Außenisolierung aufweist. Durch diese Maßnahme wird die Wärmestrahlung nach außen hin vermindert.

Die katalytische Umsetzung von Abgasen findet oberhalb einer Tempertur von 300 °C. Hat der katalytische Reaktor diese Temperatur noch nicht erreicht, so durchströmt das Abgas den Reaktor ohne daß eine gewünschte Umsetzung des Abgases in unschädliche Komponenten erfolgt ist.

Um die Temperatur, bei welcher die katalytische Umsetzung einsetzt, möglichst rasch zu erreichen, sind bereits unterschiedliche Vorschläge unterbreitet worden. Ausgangspunkt der Vorschläge ist die Zielsetzung eine möglichst rasche Aufheizung des Katalysators zu erreichen. Hierzu ist vorgeschlagen worden, einen Vorkatalysator zu verwenden, dessen Masse im Vergleich zum Hauptkatalysator relativ gering ist. Zum anderen ist vorgeschlagen worden, Katalysatoren beheizbar auszubilden, vgl. hierzu P. Langen et al "Heating Catalytic Converter Competing Technologies to Meet LEV Emission Standards" SAE Technical Paper 940470.

Durch die US 5 278 125 ist ein katalytischer Reaktor zur katalytischen Umsetzung von Abgasen, insbesondere für Abgase auf Verbrennungsmaschinen bekannt. Der Reaktor umfaßt einen eine Vielzahl von abgasdurchströmbaren Kanälen aufweisenden Wabenkörper. Der Wabenkörper hat eine Gaseintritts- und Gasaustrittsseite. Der Wabenkörper ist von der Gaseintrittsseite her über einen Teil seiner Längsstreckung gegenüber einem Gehäuseinnenmantel eines Mantels thermisch isoliert. Durch diese thermische Isolierung wird in dem vorderen Bereich des Wabenkörpers die notwendige Arbeitstemperatur schnell erreicht.

Der vorliegenden Erfindung liegt die Aufgabe zugrunde, den katalytischen Reaktor so weiterzubilden, daß dieser nicht nur in einem vorderen Teilbereich beim Kaltstart schnell die für eine katalytische Umsetzung notwendige Temperatur erreicht, sondern auch bei einer Betriebsunterbrechung seine Arbeitstemperatur noch möglichst lange behält oder schnell wieder erreicht.

Diese Aufgabe wird erfindungsgemäß durch die Merkmale des Anspruchs 1 gelöst. Vorteilhafte Weiterbildungen sind Gegenstand der Unteransprüche.

Der erfindungsgemäße katalytische Reaktor zeichnet sich dadurch aus, daß der Wabenkörper von der Gaseintrittsseite aus wenigstens über einen Teil seiner Längserstreckung gegenüber der Innenoberfläche des Mantels thermisch isoliert ist, die Außenoberfläche des Mantels zumindest in Teilbereichen eine thermische Isolierung aufweist und daß die Isolierungen und/oder der Mantel zumindest in Teilbereichen derart ausgebildet sind, daß der als Wärmespeicher dienende Mantel im aufgeheizten Zustand, sobald dem katalytischen Reaktor kein heißes Abgas mehr zugeführt wird, die gespeicherte Wärme vorwiegend an den Wabenkörper abgibt. Ist der katalytische Reaktor kalt, so benötigt dieser eine gewisse Zeitspanne bis er, durch die heißen Abgase aus einer Verbrennungskraftmaschine, seine Arbeitstemperatur erreicht hat. Während dieser Aufwärmphase ist die katalytische Oberfläche des Wabenkörpers ganz oder teilweise unwirksam. Um das Aufwärmverhalten des Wabenkörpers zu verbessern, weist dieser von der Gaseintrittsseite aus eine zumindest über einen Teil seiner Längserstreckung ausgebildete thermische Isolierung gegenüber dem Mantel auf. Durch diese Isolierung wird verhindert, daß der Mantel unmittelbar nach einem Kaltstart dem vorderen Bereich des Wabenkörpers Wärme entzieht und somit die katalytische Umsetzung verzögert. Ist dem katalytischen Reaktor über einen gewissen Zeitraum Abgas zugeführt worden, so wird jedoch der Mantel auch aufgeheizt, und zwar entweder durch die thermische Isolierung hindurch oder über Teilbereiche des Wabenkörpers ohne thermische Isolierung zum Mantel. Der Mantel dient dann als Wärmespeicher. Wird dem Reaktor kein heißes Abgas mehr zugeführt, so hält der Mantel die gespeicherte Wärme bzw. gibt sie vorwiegend an den Wabenkörper ab, da die Außenisolierung des Mantels Wärmeverluste nach außen begrenzt.

Wird dem katalytischen Reaktor erneut ein Abgas zugeführt, so befindet sich der Reaktor zumindest in Teilbereichen bereits auf seiner Arbeitstemperatur oder er erreicht diese relativ schnell in Abhängigkeit von der Dauer der Abkühlphase.

Durch diese Ausbildung des katalytischen Reaktors wird sichergestellt, daß der Reaktor nach einer gewissen Abkühlphase relativ schnell seine Betriebstemperatur wieder erreicht, wodurch strenge Abgasvorschriften besser erfüllt werden können.

Ein solcher katalytischer Reaktor kann insbesondere dazu beitragen, die strengen kalifornischen Abgasvorschriften einzuhalten. Gemäß dieser Vorschriften wird der Ausstoß der Abgase in einem Test in drei Testabschnitten gemessen (FTP-75). Im ersten Testabschnitt wird die Emission der Abgase beim Kaltstart und in einer kalten Übergangsphase gemessen. Die Zeitdauer dieses Testabschnitts beträgt 505 Sekunden. Anschließend wird in dem Zeitabschnitt zwischen 505 und 1372 Sekunden der Ausstoß der Abgase gemessen. Nach dieser Warmlaufphase wird der Motor eines Kraftfahrzeuges für 10 Minuten abgestellt und nach Ablauf dieser Abkühlphase erneut gestartet. Die Emission der Schadstoffe nach dem Heißstart wird innerhalb einer Zeitdauer von 505 Sekunden gemessen. Die erfindungsgemäße Ausgestaltung bewirkt durch die Innenisolierung ein günstiges Verhalten in der ersten Kaltstartphase und durch die Außenisolierung zusätzlich ein günstiges Verhalten beim Warmstart.

Gemäß einer vorteilhaften Weiterbildung wird vorgeschlagen, die Innenisolierung durch die Ausbildung eines Luftspaltes zu verwirklichen.

Gemäß einem anderen Vorschlag wird zur Isolierung eine Isoliermatte verwendet. Diese Ausbildung hat den Vorteil, daß die Isoliermatte zum Ausgleich von thermischen Spannungen genutzt werden kann. Die Innenisolierung kann vorteilhafterweise auch durch eine Schicht gebildet, die eine geringe Wärmeleitfähigkeit aufweist. Hierbei kann es sich um einen Faserwerkstoff handeln, der vorzugsweise keramische Fasern enthält. Es können aber auch die äußeren Kanäle des Wabenkörpers als Isolierung dienen, wenn durch geeignete Gestaltung das Abgas an der Durchströmung dieser Kanäle gehindert wird.

Für die Außenisolierung des Reaktors wird vorgeschlagen, den Mantel in eine Isoliermatte einzuwickeln, ihn mit einem zweiten durch Luftspalt getrennten Gehäuse zu umgeben oder Außenwaben anzubringen.

Zweckmäßigerweise kann der Mantel auch mit einem thermisch isolierenden Material beschichtet. Das Mantel kann z. B. mit einem thermisch stabilen Kunststoff oder dergleichen beschäumt oder bespritzt werden.

Da der Mantel zumindest teilweise als Wärmespeicher dient, ist zweckmäßigerweise der Mantel mit einer Dicke und/oder aus einem Werkstoff hergestellt, die ein hohes Wärmespeichervermögen verglichen mit dem Wabenkörper bewirken.

Es kann zweckmäßig sein, wenn der Mantel mit Wärmespeicherelementen versehen ist. Die Wärmespeicherelemente sind vorteilhafterweise in einem Bereich angeordnet, in dem der Wabenkörper mit dem Gehäusemantel in Verbindung steht, wodurch eine schnelle Wärmeabgabe von den Wärmespeicherelementen zu dem Wabenkörper erfolgen kann. Die Wärmespeicherelemente bestehen vorzugsweise aus einem Werkstoff mit einer hohen spezifischen Wärmekapazität. Dies hat den Vorteil, daß die Masse des Reaktors gering gehalten werden kann, so daß die mechanische Beanspruchung des Abgassystems, in dem der Reaktor angeordnet ist, gering gehalten werden kann, da die durch Beschleunigungen auftretenden Kräfte nicht so hoch sind. Auch die Verwendung eines Latentwärmespeichers als Wärmespeicherelement ist möglich, wobei dieser bevorzugt im mittleren Bereich des Mantels angeordnet werden sollte.

Von Vorteil ist es, wenn der Reaktor einen Wabenkörper aufweist, der wenigstens aus zwei hintereinander angeordneten und gegebenenfalls miteinander verbundenen Teilkörpern besteht. Der vordere Teilkörper ist dabei beheizbar, insbesondere elektrisch beheizbar. Die Heizung beschleunigt das Aufwärmen des vorderen Teilkörpers auf die Arbeitstempertur ohne daß Wärme zur Aufheizung des Mantels verbraucht wird. Die thermische Isolierung des beheizbaren Teilbereiches kann dabei gleichzeitig eine elektrische Isolierung sein.

Grundsätzlich ist ein wichtiges Prinzip der vorliegenden Erfindung, die Wärmeverluste vom in Strömungsrichtung gesehen ersten Teilbereich des katalytischen Konverters zum Mantel klein zu halten, um in der Kaltstartphase ein schnelles Ansprechen zu erreichen. Nach dem Ansprechen soll im mittleren Teilbereich wiedererum schnell Wärme an den Mantel abgegeben werden, die dort gespeichert wird. Bei Fahrtunterbrechungen behält der mittlere Bereich dann lange Zeit eine über der Anspringtemperatur des katalytischen Konverters liegende Temperatur, so daß er beim Wiederstart sofort aktiv wird. Die im Mantelrohr gespeicherte Wärme wird dabei langsam an den mittleren Teil des Wabekörpers abgegeben. Da Wärmeverluste in dieser Phase hauptsächlich über die Stirnseiten des Wabenkörpers erfolgen, ist es günstig, wenn auch der hintere Teil des Wabenkörpers thermisch vom Mantelrohr isoliert ist. Die Stirnseite verliert dann weniger Energie. Vorderer und hinterer Teilbereich schirmen dadurch den mittleren Bereich gegen Wärmeverluste an den Stirnseiten ab.

Weitere Ausführungsbeispiele, vorteilhafte Ausgestaltungen und Anwendungsmöglichkeiten der Erfindung werden anhand der Zeichnung beschrieben, ohne daß die Erfindung auf diese Beispiele beschränkt ist. Es zeigen:
- Figur 1: ein erstes Ausführungsbeispiel im Längsschnitt,
- Figur 2: ein zweites Ausführungsbeispiel im Längsschnitt,
- Figur 3: ein drittes Ausführungsbeispiel im Längsschnitt und
- Figur 4: einen Reaktor mit einem ersten beheizbaren und einem zweiten Teilkörper im Längsschnitt.

Der Reaktor umfaßt einen katalytisch wirkenden Wabenkörper 2, der in einem Mantel 1 angeordnet ist. Der Wabenkörper 2 weist von einem Abgas durchströmbare Kanäle 3 auf. Der Wabenkörper 3 ist mit dem Mantel 1 verbunden. In dem ersten und dem zweiten Ausführungsbeispiel ist der Wabenkörper 2 mit dem Mantel 1 unter Zwischenschaltung einer metallischen Verbindungsschicht 10 verbunden. Die Verbindungsschicht 10 besteht vorzugsweise aus einem Werkstoff, welcher eine gute Wärmeleitfähigkeit aufweist.

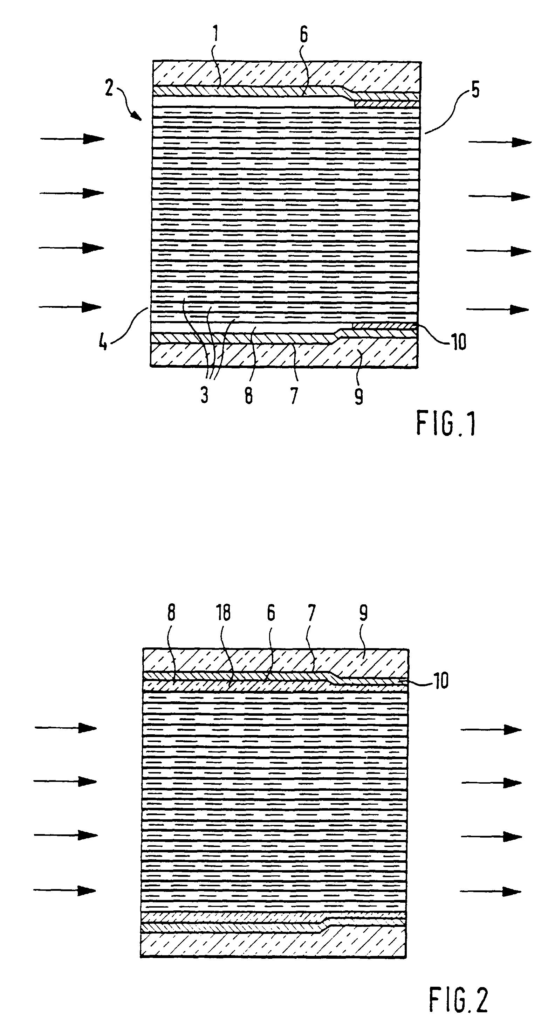

Der Wabenkörper 2 ist gegenüber der Innenoberfläche 6 des Mantels 1 wenigstens über einen Teil seiner Längsstreckung thermisch isoliert. Die thermische Innenisolierung 8 erstreckt sich von der Gaseintrittsseite 4 des Warmkörpers 2 in Richtung der Gasaustrittsseite 5. In dem in der Figur 1 dargestellten Ausführungsbeispiel ist die Innenisolierung 8 durch eine Ausbildung eines Luftspaltes verwirklicht.

Das in der Figur 2 dargestellte Ausführungsbeispiel unterscheidet sich 5 vom ersten Ausführungsbeispiel hinsichtlich der Innenisolierung 8 dadurch, daß die Innenisolierung 8 durch eine Isoliermatte 18 realisiert ist. Auf der Außenoberfläche 7 des Mantels 1 ist eine Außenisolierung 9 aufgebracht.

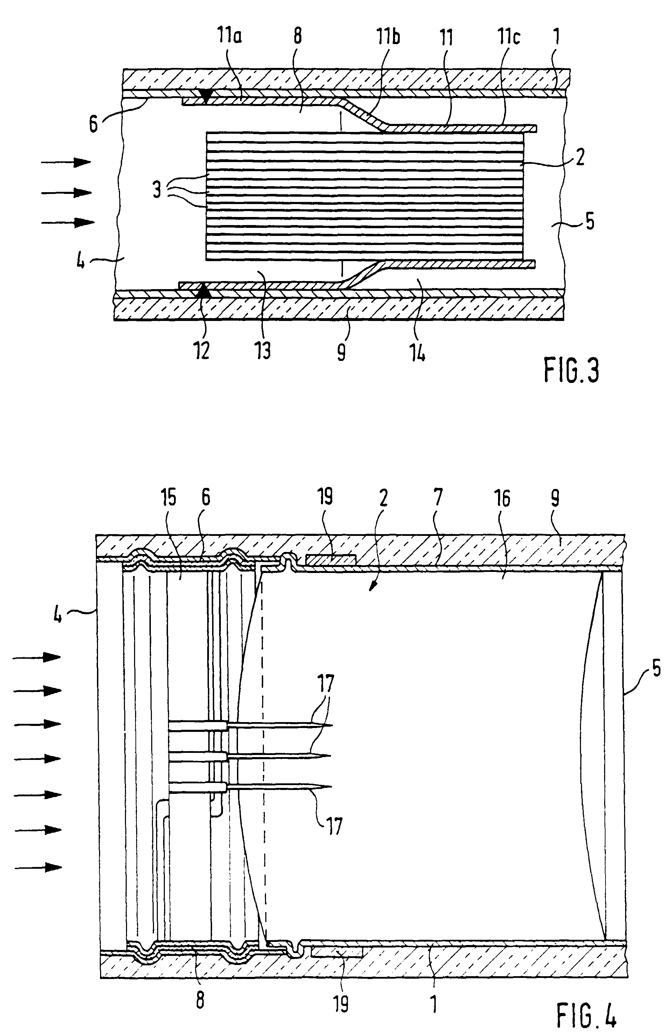

In der Figur 3 ist ein drittes Ausführungsbeispiel eines erfindungsgemäßen katalytischen Reaktors dargestellt. Der Wabenkörper 2 weist von einem Fluid durchströmbare Kanäle 3 auf. Der Wabenkörper 2 ist über ein Verbindungsrohr 11 mit dem Mantel 1 verbunden. Das Verbindungsrohr 11 ist in drei Teilbereiche unterteilt, nämlich einen an der Innenoberfläche 6 des Mantels 1 anliegenden ersten Teilbereich 11a, einen zweiten sich konisch nach innen verengenden Teilbereich 11b und einen dritten am Wabenkörper 2 anliegenden Teilbereich 11c.

Der erste Teilbereich 11a ist z.B. mittels einer Schweißverbindung 12 mit dem Mantel 1 verbunden. Der dritte Teilbereich 11c kann z. B. mit einem metallischen Wabenkörper 2 hart verlötet sein.

Durch die Ausbildung des Verbindungsrohres 11 bildet sich ein erster Spalt 13 zwischen dem ersten Teilbereich 11a und dem Wabenkörper 2. Ferner ist ein zweiter Spalt 14 zwischen dem Mantel 1 und dem dritten Teilbereich 11c ausgebildet. Die Spalte 13, 14 wirken als thermische Isolierungen und entkoppeln daher den Mantel 1 von dem Wabenkörper 2 thermisch. Der zweite Teilbereich 11b des Verbindungsrohres 11 wirkt als thermische Brücke. Durch diese thermische Brücke wird zum einen Wärme unter Zwischenschaltung des Teilbereiches 11a in den Mantel 1 eingeleitet und von diesem über die Teilbereiche 11a, 11b und 11c zum Wabenkörper 2 abgeleitet, wenn zwischen dem Wabenkörper und dem Mantel ein Temperaturgradient besteht.

Das Mantel 1 wirkt als Wärmespeicher und hat eine äußere Isolierung 9. In dem Spalt 13 und/oder dem Spalt 14 kann auch ein Isolierwerkstoff eingebracht sein.

Wenn das Verbindungsrohr 11 genügend dick ausgestaltet ist, z. B. mit einer Dicke von 0,5 bis 2 mm, vorzugsweise etwa 1 mm, so wirkt es selbst wie ein Mantel, der in einem vorderen Teilbereich 11c vom Wabenkörper isoliert ist und in einem hinteren Teilbereich 11a am Wabenkörper anliegt und begünstigt das Anspring- und Warmstartverhalten des katalytischen Reaktors.

In der Figur 4 ist ein Wabenkörper 2 dargestellt, der in zwei Teilkörper 15 und 16 unterteilt ist. Die Teilkörper 15, 16 sind hintereinander in Strömungsrichtung betrachtet angeordnet. Die Teilkörper 15, 16 sind über Stützstrukturen 17 miteinander verbunden. Der erste Teilkörper 15 ist elektrisch beheizbar zwischen dem Teilkörper 15 und der Innenoberfläche 6 des Mantels 1 ist eine Innenisolierung 8 vorgesehen, die sowohl den Teilkörper 15 gegenüber der Innenoberfläche 6 thermisch als auch elektrisch isoliert. Die Innenisolierung 8 kann zur Halterung des Teilkörpers 15 im Mantel 1 dienen. Der zweite Teilkörper 16 ist unmittelbar mit dem Mantel 1 verbunden. Auf der Außenoberfläche 7 des Mantels 1 ist eine Außenisolierung 9 vorgesehen.

Beim Kaltstart wird der Teilkörper 15 über eine nicht weiter dargestellte Heizung beheizt. Durch die elektrische Heizung erreicht der Teilkörper 15 relativ schnell seine Betriebstemperatur. Nach Erreichen der Betriebstemperatur wird die Heizung abgestellt. Der Teilkörper 15 ist gegenüber dem Mantel 1 thermisch isoliert, so daß eine Wärmeübertragung zum Mantel hin gar nicht oder nur in einem sehr geringen Umfang stattfindet. Der zweite Teilkörper 16 gibt, wenn er sich später bei längerem Betrieb aufheizt, Wärme an den Mantel 1 ab. Diese Wärme wird bedingt durch die Außenisolierung 9 im Mantel 1 und, soweit vorhanden, in zusätzlichen Wärmespeicherelementen 19 gespeichert.

Wird nun dem katalytischen Reaktor für eine gewisse Zeit kein Abgas zugeführt, so sinkt die Temperatur in den Teilkörpern 15 und 16. Die im Mantel 1 gespeicherte Wärmeenergie wird an den Teilkörper 16 abgegeben, so daß dieser nur relativ langsam abkühlt, so daß bei einer erneuten Zuführung eines Abgases der Teilkörper 16 sich noch oberhalb der für die katalytische Wirkung notwendigen Temperatur befindet oder diese relativ schnell erreicht.

Durch diese Maßnahmen kann vermieden werden, daß die Heizung erneut zum Einsatz kommen muß, was die Batterie eines Kraftfahrzeugs stark belasten würde.

Durch geeignete Wahl der Maße des thermisch isolierten vorderen Teilbereiches eines katalytischen Reaktors, der Wärmeleitfähigkeiten der beiden Isolierschichten und/oder der Wärmekapazität des Mantels, die gegebenenfalls noch in Teilbereichen durch Wärmespeicherelemente vergrößert werden kann, können sowohl das Kaltstartverhalten, als auch das Warmstartverhalten verbessert werden, obwohl beide Eigenschaften sich eigentlich gegenseitig beeinträchtigen. Daher leistet die Erfindung einen wichtigen Beitrag zur Erfüllung strenger Abgasgesetze.

### Bezugszeichenliste

- 1: Mantel
- 2: Wabenkörper
- 3: Kanäle
- 4: Gaseintrittsseite
- 5: Gasaustrittsseite
- 6: Innenoberfläche des Mantels
- 7: Außenoberfläche des Mantels
- 8: Innenisolierung
- 9: Außenisolierung
- 10: Verbindungsschicht
- 11: Verbindungsrohr
- 11a, 11b, 11c: Teilbereiche
- 12: Schweißverbindung
- 13: Spalt
- 14: Spalt
- 15: Teilkörper
- 16: Teilkörper
- 17: Stutzstrukturen
- 18: Isoliermatte
- 19: Wärmespeicherelemente

## Patentansprüche

1. Katalytischer Reaktor zur katalytischen Umsetzung von Abgasen, insbesondere für Abgase aus Verbrennungskraftmaschinen, mit einem in einem metallischen Mantel (1) angeordneten Wabenkörper (2), der eine Vielzahl von Abgas durchströmbarer Kanäle (3) aufweist und der eine Gaseintritts-(4) und eine Gasaustrittsseite (5) hat, wobei der Wabenkörper (2) von der Gaseintrittsseite (4) aus wenigstens über einen Teil seiner Längserstreckung gegenüber der Innenoberfläche (6) des Mantels (1) durch eine Innenisolierung (8) thermisch isoliert ist, wobei auch die Außenoberfläche (7) des Mantels (1) zumindest in Teilbereichen eine thermische Isolierung (9) aufweist, dadurch gekennzeichnet, daß die Isolierungen (8,9) und/oder der Mantel (1) zumindest in Teilbereichen derart ausgebildet sind, daß der als Wärmespeicher dienende Mantel (1) im aufgeheizten Zustand, sobald dem katalytischen Reaktor kein heißes Abgas mehr zugeführt wird, die gespeicherte Wärme vorwiegend an den Wabenkörper (2) abgibt.

2. Reaktor nach Anspruch 1, dadurch gekennzeichnet, daß die Innenisolierung (8) ein Luftspalt (13) ist.

3. Reaktor nach Anspruch 1, dadurch gekennzeichnet, daß die Innenisolierung (8) durch eine Isoliermatte (18) gebildet ist.

4. Reaktor nach Anspruch 1 oder 3, dadurch gekennzeichnet, daß die Innenisolierung (8) durch eine Schicht gebildet ist, die eine geringe Wärmeleitfähigkeit aufweist, insbesondere aus nicht vom Abgas durchströmten Kanälen des Wabenkörpers (2).

5. Reaktor nach einem der Ansprüche 1 bis 4, dadurch gekennzeichnet, daß die Außenisolierung (9) durch eine Isoliermatte (18) gebildet ist.

6. Reaktor nach einem der Ansprüche 1 bis 4, dadurch gekennzeichnet, daß der Mantel (1) mit einem thermisch isolierenden Material beschichtet ist.

7. Reaktor nach einem der Ansprüche 1 bis 4, dadurch gekennzeichnet, daß der Mantel (1) von einem Außengehäuse umgeben ist mit einer zwischen beiden ausgebildeten Isolierung.

8. Reaktor nach einem der Ansprüche 1 bis 6, dadurch gekennzeichnet, daß der Mantel (1) zumindest in Teilbereichen ein hohes spezifisches Wärmespeichervermögen aufweist.

9. Reaktor nach Anspruch 7, dadurch gekennzeichnet, daß der Mantel zumindest in Teilbereichen (1) aufgrund seiner Dicke und/oder seines Materials ein verglichen mit den Wänden des Wabenkörpers (2) hohes Wärmespeichervermögen aufweist.

10. Reaktor nach Anspruch 8 oder 9, dadurch gekennzeichnet, daß der Mantel (1) mit Wärmespeicherelementen (19) versehen ist.

11. Reaktor nach Anspruch 8, 9 oder 10, dadurch gekennzeichnet, daß der Mantel (1) und/oder die Wärmespeicherelemente (19) aus einem Werkstoff mit einer hohen spezifischen Wärmekapazität bestehen.

12. Reaktor nach Anspruch 8, 9, 10 oder 11, dadurch gekennzeichnet, daß zumindest Teile des Mantels als Latentwärmespeicher ausgebildet sind.

13. Reaktor nach einem der vorstehenden Ansprüchen, dadurch gekennzeichnet, daß der Wabenkörper (2) wenigstens zwei hintereinander angeordnete und miteinander verbundene Teilkörper (15, 16) aufweist, wobei der vordere Teilkörper (15) beheizbar ist.

14. Reaktor nach einem der Ansprüche 1 bis 12, dadurch gekennzeichnet, daß der Wabenkörper (2) aus wenigstens zwei hintereinander angeordneten Teilbereichen oder Teilkörpern besteht.

15. Reaktor nach Anspruch 13 oder 14, dadurch gekennzeichnet, daß nur der vordere Teilbereich oder Teilkörper (15) gegenüber dem Mantel (1) thermisch isoliert ist.

16. Reaktor nach einem der vorstehenden Ansprüche, dadurch gekennzeichnet, daß der von der Innenoberfläche (6) des Mantels (1) thermisch isolierte Teil des Wabenkörpers (2) zumindest so groß ist, daß bis zum Erreichen der für die katalytische Reaktion notwendigen Anspringtemperatur beim Kaltstart einer Verbrennungskraftmaschine im vordersten Teilbereich noch keine oder nur unbedeutende Wärmeverluste im hinteren Teilbereich durch Wärmeübertragung an den Mantel (1) auftreten.

17. Reaktor nach Anspruch 16, dadurch gekennzeichnet, daß der von der Innenoberfläche (6) des Mantels (1) thermisch isolierte Teil des Wabenkörpers (2) eine Länge von 8 bis 80 mm hat, vorzugsweise 30 bis 60 mm.

18. Reaktor nach einem der vorstehenden Ansprüche, dadurch gekennzeichnet, daß die Innenisolierung (8) einen geringeren Isolationswiderstand als die Außenisolierung (9) hat.

19. Reaktor nach einem der vorhergehenden Ansprüche, dadurch gekennzeichnet, daß ein hinterer Teilbereich oder Teilkörper des Wabenkörpers ebenfalls gegenüber dem Mantel (1) mit einer thermischen Innenisolierung versehen ist.

## Claims

1. A catalytic reactor for the catalytic conversion of exhaust gases, in particular for exhaust gases from internal combustion engines, comprising a honeycomb body (2) which is arranged in a metal casing (1) and which has a plurality of passages (3) through which exhaust gas can flow and which has a gas entry end (4) and a gas exit end (5). wherein from the gas entry end (4) at least over a part of its longitudinal extent the honeycomb body (2) is thermally insulated by an internal insulation (8) relative to the inside surface (6) of the casing (1), wherein the outside surface (7) of the casing (1) also has a thermal insulation (9) at least in portions thereof, characterised in that the insulations (8, 9) and/or the casing (1), at least in portions, are of such a configuration that in the heated condition, as soon as no more hot exhaust gas is fed to the catalytic reactor, the casing (1) which serves as a heat store gives off the stored heat predominantly to the honeycomb body (2).

2. A reactor according to claim 1 characterised in that the internal insulation (8) is an air gap (13).

3. A reactor according to claim 1 characterised in that the internal insulation (8) is formed by an insulating mat (18).

4. A reactor according to claim 1 or claim 3 characterised in that the internal insulation (8) is formed by a layer which has a low level of thermal conductivity, in particular comprising passages of the honeycomb body (2), through which the exhaust gas does not flow.

5. A reactor according to one of claims 1 to 4 characterised in that the external insulation (9) is formed by an insulating mat (18).

6. A reactor according to one of claims 1 to 4 characterised in that the casing (1) is coated with a thermally insulating material.

7. A reactor according to one of claims 1 to 4 characterised in that the casing (1) is surrounded by an external housing with an insulation between the two.

8. A reactor according to one of claims 1 to 6 characterised in that at least in portions thereof the casing (1) has a high specific heat storage capability.

9. A reactor according to claim 7 characterised in that at least in portions (1), by virtue of its thickness and/or its material, the casing has a heat storage capability which is high, compared to the walls of the honeycomb body (2).

10. A reactor according to claim 8 or claim 9 characterised in that the casing (1) is provided with heat storage elements (19).

11. A reactor according to claim 8, claim 9 or claim 10 characterised in that the casing (1) and/or the heat storage elements (19) comprise a material with a high specific thermal capacity.

12. A reactor according to claim 8, claim 9, claim 10 or claim 11 characterised in that at least parts of the casing are in the form of a latent heat storage means.

13. A reactor according to one of the preceding claims characterised in that the honeycomb body (2) has at least two body portions (15, 16) which are arranged one behind the other and which are connected to each other, wherein the front body portion (15) is heatable.

14. A reactor according to one of claims 1 to 12 characterised in that the honeycomb body (2) comprises at least two portions or body portions which are arranged one behind the other.

15. A reactor according to claim 13 or claim 14 characterised in that only the front portion or body portion (15) is thermally insulated with respect to the casing (1).

16. A reactor according to one of the preceding claims characterised in that the part of the honeycomb body (2) which is thermally insulated from the inside surface (6) of the casing (1) is at least so large that no or only insignificant heat losses occur in the rear portion due to the transmission of heat to the casing (1) until the attainment of the light-off temperature necessary for the catalytic reaction when cold-starting an internal combustion engine in the foremost portion.

17. A reactor according to claim 16 characterised in that the part of the honeycomb body (2) which is thermally insulated from the inside surface (6) of the casing (1) is of a length of 8 to 80 mm, preferably 30 to 60 mm.

18. A reactor according to one of the preceding claims characterised in that the internal insulation (8) has a lower level of insulation resistance than the external insulation (9).

19. A reactor according to one of the preceding claims characterised in that a rear portion or body portion of the honeycomb body is also provided with a thermal internal insulation with respect to the casing (1).

## Revendications

1. Réacteur catalytique destiné à la conversion catalytique de gaz d'échappement, notamment de gaz d'échappement de moteurs à combustion interne, comportant un corps alvéolaire (2) disposé dans une enveloppe métallique (1), qui présente une pluralité de canaux (3) pouvant être traversés par les gaz d'échappement, et un côté d'entrée (4) des gaz ainsi qu'un côté de sortie (5) des gaz, le corps alvéolaire (2) étant thermiquement isolé à partir du côté d'entrée (4) des gaz par rapport à la face intérieure (6) de l'enveloppe (1) par une isolation intérieure (8), au moins sur une partie de son extension longitudinale, la face extérieure (7) de l'enveloppe (1) comportant également une isolation thermique (9), au moins dans des zones partielles, caractérisé en ce que les isolations (8, 9) et/ou l'enveloppe (1) sont réalisées, au moins dans des zones partielles, de telle sorte que l'enveloppe (1) servant à l'état chauffé d'accumulateur de chaleur, délivre la majeure partie de la chaleur accumulée au corps alvéolaire (2) dès qu'il n'est plus amené de gaz d'échappement chauds au réacteur catalytique.

2. Réacteur selon la revendication 1, caractérisé en ce que l'isolation intérieure (8) est une fente d'aération (13).

3. Réacteur selon la revendication 1, caractérisé en ce que l'isolation intérieure (8) est constituée d'un matelas isolant (18).

4. Réacteur selon la revendication 1 ou 3, caractérisé en ce que l'isolation intérieure (8) est constituée d'une couche de faible conductivité thermique, notamment de canaux du corps alvéolaire (2) qui ne sont pas traversés par les gaz d'échappement.

5. Réacteur selon l'une quelconque des revendications 1 à 4, caractérisé en ce que l'isolation extérieure (9) est constituée d'un matelas isolant (18).

6. Réacteur selon l'une quelconque des revendications 1 à 4, caractérisé en ce que l'enveloppe (1) est revêtue d'un matériau d'isolation thermique.

7. Réacteur selon l'une quelconque des revendications 1 à 4, caractérisé en ce que l'enveloppe (1) est entourée d'un carter extérieur avec une isolation réalisée entre les deux.

8. Réacteur selon l'une quelconque des revendications 1 à 6, caractérisé en ce que l'enveloppe (1) a un pouvoir spécifique élevé d'accumulation de chaleur, au moins dans des zones partielles.

9. Réacteur selon la revendication 7, caractérisé en ce qu'en raison de son épaisseur et/ou de son matériau, l'enveloppe a un pouvoir élevé d'accumulation de chaleur par rapport aux parois du corps alvéolaire (2), au moins dans des zones partielles (1).

10. Réacteur selon la revendication 8 ou 9, caractérisé en ce que l'enveloppe (1) est munie d'éléments (19) d'accumulation de chaleur.

11. Réacteur selon la revendication 8, 9 ou 10, caractérisé en ce que l'enveloppe (1) et/ou les éléments (19) d'accumulation de chaleur sont constitués d'un matériau ayant une capacité thermique spécifique élevée.

12. Réacteur selon la revendication 8, 9, 10 ou 11, caractérisé en ce que des parties au moins de l'enveloppe sont réalisées en tant qu'accumulateur de chaleur latente.

13. Réacteur selon l'une quelconque des revendications précédentes, caractérisé en ce que le corps alvéolaire (2) comporte au moins deux corps partiels (15, 16) disposés l'un derrière l'autre et reliés entre eux, le corps partiel avant (15) pouvant être chauffé.

14. Réacteur selon l'une quelconque des revendications 1 à 12, caractérisé en ce que le corps alvéolaire (2) est constitué d'au moins deux zones partielles ou corps partiels disposés l'un derrière l'autre.

15. Réacteur selon la revendication 13 ou 14, caractérisé en ce que seule la zone partielle ou le corps partiel avant (15) est thermiquement isolé par rapport à l'enveloppe (1).

16. Réacteur selon l'une quelconque des revendications précédentes, caractérisé en ce que la partie du corps alvéolaire (2) qui est thermiquement isolée de la face intérieure (6) de l'enveloppe (1) est au moins assez grande pour que, lors du démarrage à froid d'un moteur à combustion interne, et jusqu'à ce que la température nécessaire au déclenchement de la réaction catalytique soit atteinte dans la zone partielle avant, des déperditions thermiques dues à un transfert thermique sur l'enveloppe (1) n'apparaissent pas encore, ou que de façon négligeable, dans la zone partielle arrière.

17. Réacteur selon la revendication 16, caractérisé en ce que la partie du corps alvéolaire (2) qui est thermiquement isolée de la face intérieure (6) de l'enveloppe (1) a une longueur de 8 à 80 mm, de préférence de 30 à 60 mm.

18. Réacteur selon l'une quelconque des revendications précédentes, caractérisé en ce que la résistance d'isolement de l'isolation intérieure (8) est plus faible que celle de l'isolation extérieure (9).

19. Réacteur selon l'une quelconque des revendications précédentes, caractérisé en ce qu'une zone partielle ou corps partiel arrière du corps alvéolaire comporte également une isolation thermique intérieure par rapport à l'enveloppe (1).
